# FASCICULE DE BREVET EUROPEEN

(11) **EP 3 956 815 B1**
(45) Date de publication et mention de la délivrance du brevet: **25.02.2026**
(21) Numéro de dépôt: 20728530.5
(22) Date de dépôt: 16.04.2020
(51) Int. Cl.: G06K 19/07

(54) **MODULE DE CAPTEUR BIOMÉTRIQUE POUR CARTE À PUCE ET PROCÉDÉ DE FABRICATION D'UN TEL MODULE**
BIOMETRISCHES SENSORMODUL FÜR EINE CHIPKARTE UND VERFAHREN ZUR HERSTELLUNG EINES SOLCHEN MODULS
BIOMETRIC SENSOR MODULE FOR A SMART CARD AND METHOD FOR MANUFACTURING SUCH A MODULE

(30) Priorité: 19.04.2019 FR 1904206
(43) Date de publication de la demande: 23.02.2022
(73) Titulaire: Linxens Holding, 78200 Mantes-la-Jolie (FR)
(72) Inventeur: MATHIEU, Christophe, 78200 MANTES-LA-JOLIE (FR); LAURENS DE LOPEZ, Claire, 78480 VERNEUIL SUR SEINE (FR)
(74) Mandataire: INNOV-GROUP
(86) Numéro de dépôt international: PCT/FR2020/000128
(87) Numéro de publication internationale: WO 2020/212660

(56) Documents cités:
- WO-A1-2018/066857
- WO-A1-2019/058259
- US-A1- 2017 293 793

## Description

### Domaine technique

L'invention concerne le domaine de la carte à puce.

### Etat de la technique

Dans le domaine de la carte à puce, et notamment dans celui des cartes à puce utilisées comme moyen de paiement, les fabricants souhaitent offrir toujours davantage de sécurité aux utilisateurs. Ainsi, il a été proposé d'intégrer, à des cartes à puce, des capteurs biométriques pour la lecture d'empreintes digitales. On peut se référer par exemple aux demandes de brevet WO2018066857A1 et WO2019058259A1, pour des exemples de telles cartes.

Par exemple, pour les cartes bénéficiant de modes de lecture avec et sans contact, un module intégré à la carte et comprenant un capteur biométrique peut permettre de n'autoriser une transaction que si l'empreinte digitale du titulaire de la carte est détectée. Ce type de carte est par exemple décrit dans le document de brevet publié sous le numéro EP 3 336 759 A1. Pour réaliser une telle carte, une cavité est fraisée dans la carte, pour mettre à nu un circuit électrique préalablement intégré dans le corps de la carte, et y loger le module. Le module alors logé dans cette cavité est aussi électriquement connecté au circuit.

Il a été constaté que la zone de détection sur laquelle doit être posé un doigt, pour que l'empreinte digitale soit reconnue, est soumise à un certain nombre de facteurs (humidité, sueur, abrasion mécanique, vieillissement UV, température, etc.) susceptibles de détériorer et/ou d'user prématurément cette zone de détection. Il peut être envisagé de recouvrir cette surface de détection d'une couche protectrice. Mais il faut alors trouver un matériau qui à la fois permet d'accroitre la résistance aux facteurs agressifs auxquels est soumise la zone de détection, permet également de ne pas perturber la détection de l'empreinte digitale, mais est aussi compatible avec l'ensemble des autres étapes de fabrication, de traitement et d'encartage du module biométrique.

L'invention vise à trouver une solution permettant d'améliorer au moins partiellement la protection de la zone de détection.

### Résumé de l'invention

Ainsi il est proposé selon l'invention un module de capteur biométrique pour carte à puce, comprenant
- un support diélectrique comportant une face avant et une face arrière, formant toutes deux des faces principales du support, et
- un capteur biométrique pour la détection d'empreintes digitales attaché à la face arrière et s'étendant sous la face arrière sur une aire de détection.

En outre, ce module comprend, en face avant, sur une zone de détection s'étendant en vis-à-vis de l'aire de détection et sur une surface correspondant au moins à celle de l'aire de détection, au moins une couche de protection comprenant un matériau de couverture photoimageable (« photoimageable coverlay » en anglais), c'est-à-dire un matériau photosensible.

Ainsi, grâce à cette couche de matériau de couverture photoimageable, il est possible de protéger le support avec un matériau relativement résistant mécaniquement et chimiquement, dont l'emploi peut être aisément intégré dans un procédé industriel, notamment dans un procédé mis en œuvre de rouleau à rouleau, et compatible avec des étapes de chauffage nécessaires à une éventuelle connexion par soudure du module au circuit déjà intégré dans le corps d'une carte. Son caractère photoimageable est en outre compatible avec la mise en œuvre d'étapes de photo-lithographie maîtrisables industriellement et compatibles avec de hauts rendements.

Préférentiellement, la couche de protection comprenant le matériau de couverture photoimageable est à base de résines époxy-acrylates dont les propriétés physico-chimiques, notamment en termes de dureté et de résistance à l'abrasion, sont après réticulation UV ou thermique supérieures à celles que l'on pourrait obtenir avec de purs acrylates, par exemple. De même, les résines époxy-acrylates sont plus faciles à mettre en œuvre que les résines époxy.

Ce module de carte à puce comprend éventuellement l'une et/ou l'autre des caractéristiques suivantes, considérées chacune indépendamment l'une de l'autre, ou chacune en combinaison d'une ou plusieurs autres :
- la couche de protection a une épaisseur comprise entre 5 et 100 micromètres, et a plus préférentiellement une épaisseur voisine de 25 micromètres ;
- la couche de protection est déposée sur une couche d'adhésif à base de résine époxy ;
- un bézel est formé sur la face avant et la couche de protection recouvre une zone située à l'intérieur du bézel ;
- il comprend sur la face arrière, des plots de connexion électriquement conducteurs, ces plots de connexion étant placés essentiellement en vis-à-vis d'une zone de la face avant recouverte par le bézel et au moins un via conducteur étant réalisé dans l'épaisseur du support, ce via reliant électriquement le bézel aux plots de connexion ;
- au moins certains des plots de connexion comportent chacun au moins une goutte de matériau de soudure, cette goutte de matériau de soudure étant déposée avant ou après l'assemblage du capteur biométrique sur le support diélectrique, et préférentiellement après l'assemblage du capteur biométrique sur le support diélectrique.

Selon un autre aspect, l'invention concerne une carte à puce comprenant un module de capteur biométrique selon l'invention. Cette carte à puce comprend un corps de carte avec un circuit électrique intégré dans le corps de carte. Le module et le circuit sont électriquement connectés l'un à l'autre à l'aide d'un matériau de soudure.

Selon encore un autre aspect, l'invention concerne un procédé de fabrication d'un module de capteur biométrique pour carte à puce comprenant des étapes au cours desquelles
- on fournit un support diélectrique comportant une face avant et une face arrière, formant toutes deux des faces principales du support,
- on attache un capteur biométrique pour la détection d'empreintes digitales à la face arrière, une aire de détection couverte par le capteur sur la face arrière étant placée en vis-à-vis d'une zone de détection en face avant.

Selon ce procédé, on réalise en outre, sur la zone de détection, une couche de protection d'un matériau de couverture photoimageable.

Ce procédé comprend éventuellement l'une et/ou l'autre des caractéristiques suivantes, considérées indépendamment les unes des autres ou chacune en combinaison d'une ou plusieurs autres :
- le support diélectrique est un support flexible de la famille des polyimides ;
- on revêt la face avant d'une couche électriquement conductrice, dans laquelle on réalise un bézel, la couche de protection recouvrant en face avant une surface située à l'intérieur du bézel ;
- on réalise au moins un via conducteur, dans l'épaisseur du support pour relier électriquement le bézel à la face arrière ;
- on fournit le support avec une première couche électriquement conductrice sur la face arrière, puis on revêt la face avant d'une couche d'adhésif,
- on réalise au moins un trou destiné à former le via, ce trou traversant la première couche conductrice, le support et la couche d'adhésif ;
- on lamine une deuxième couche électriquement conductrice sur la face arrière, cette deuxième couche conductrice recouvrant au moins partiellement le trou destiné à former le via ;
- on grave le bézel dans la deuxième couche conductrice, en laissant le trou destiné à former le via au moins partiellement recouvert de la deuxième couche conductrice ;
- on dépose, à l'intérieur du bézel, la couche de protection sur la couche d'adhésif mise à nu lors de la gravure du bézel ;
- on grave dans la première couche conductrice, des plots de connexion, de manière à ce qu'au moins certains d'entre eux soient placés essentiellement en vis-à-vis d'une zone de la face avant recouverte par le bézel ;
- on attache le capteur biométrique sur la face arrière du support à l'aide d'un adhésif pour fixation de puces (« die attach » en anglais) réticulant à des températures comprises entre 100°C et 150°C ;
- on dépose au moins une goutte de soudure sur au moins certains des plots de connexion.

### Brève description des dessins

D'autres aspects, buts et avantages de l'invention apparaîtront à la lecture de la description détaillée qui suit, ainsi qu'à l'aide des dessins annexés, donnés à titre d'exemples non-limitatifs et sur lesquels :
[Fig.1] représente schématiquement en perspective une carte à puce conforme à un premier exemple de mode de réalisation de l'invention ;
[Fig.2] représente schématiquement en perspective une carte à puce conforme à un deuxième exemple de mode de réalisation de l'invention ;
[Fig.3] représente schématiquement en coupe, différentes étapes d'un exemple de procédé de fabrication d'un module de capteur biométrique tel que celui intégré à la carte représentée sur la figure 2 ;
[Fig.4] représente schématiquement en coupe, l'intégration dans une carte d'un module de capteur biométrique obtenu à l'aide d'un procédé tel que celui illustré par la figure 3 ;
[Fig.5] représente schématiquement différentes variantes envisageables pour la forme des plots de connexion placés en face arrière d'un module de capteur biométrique obtenu à l'aide d'un procédé tel que celui illustré sur la figure 3 ; et
[Fig.6] représente schématiquement encore d'autres variantes envisageables pour la forme des plots de connexion placés en face arrière d'un module de capteur biométrique obtenu à l'aide d'un procédé tel que celui illustré sur la figure 3.

### Description détaillée

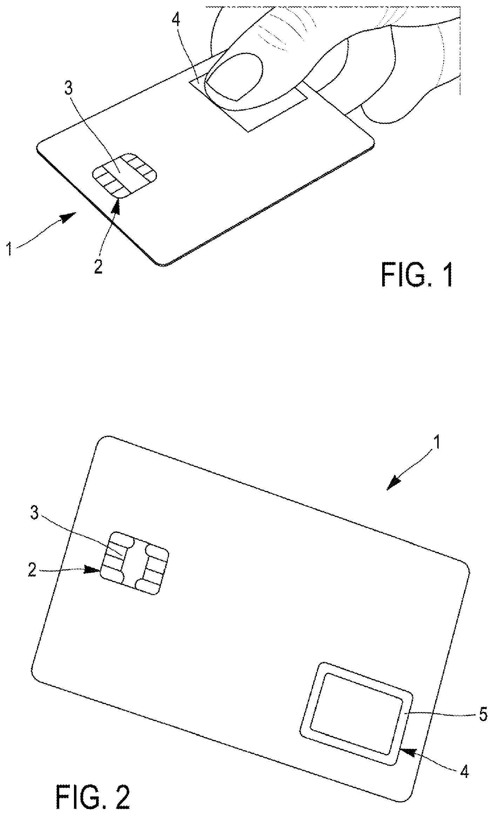

Un exemple de carte à puce 1 selon l'invention est représenté sur la figure 1. Selon cet exemple, la carte 1 est une carte bancaire au format ID-1. Cette carte 1 comporte un premier module 2 comprenant un connecteur 3 et une puce électronique (sous le connecteur). Le connecteur 3 permet de connecter électriquement la puce électronique à un lecteur de cartes, pour échanger des données entre la puce et le lecteur de cartes.

Dans le cas des cartes à double interface, c'est-à-dire permettant une lecture par contact ou sans contact, cette carte 1 comporte également une antenne intégrée dans le corps de la carte 1. Cette antenne est connectée par exemple à la puce située dans le premier module 2. Cette antenne permet d'échanger sans contact des données entre la puce et un lecteur de cartes sans contact. Cette antenne, ou une autre partie d'un circuit électrique situé dans le corps de la carte 1, est également connectée électriquement à un deuxième module 4 intégré à la carte 1. Le deuxième module 4 est un module biométrique. Ce module biométrique 4 comprend un capteur pour la reconnaissance d'empreintes digitales. Le deuxième module 4 permet de déterminer si l'empreinte digitale lue par le capteur correspond à celle d'un utilisateur qui a l'autorisation de se servir de cette carte 1. Dans ce cas, une communication sans contact entre la puce et un lecteur peut être autorisée.

L'exemple de mode de réalisation de la carte 1 représentée sur la figure 2, diffère de celui représenté sur la figure 1, essentiellement par le fait que le deuxième module 4 comporte un contour conducteur 5 (« bézel » 5 en anglais) continu ou non. Le bézel 5 est relié électriquement au capteur biométrique situé en face arrière du deuxième module 4. Il permet d'évacuer d'éventuelles charges électrostatiques qui pourraient détériorer le capteur ou empêcher la lecture d'une empreinte digitale par le capteur. Sur la figure 2, le bézel 5 a une forme annulaire continue. Selon des variantes, le bézel 5 peut être constitué de plusieurs segments, ou points, conducteurs agencés autour de la zone sur laquelle doit être placé un doigt pour lire l'empreinte digitale correspondante.

Le procédé de fabrication d'un module du type de celui illustré sur la figure 2 est décrit ci-dessous.

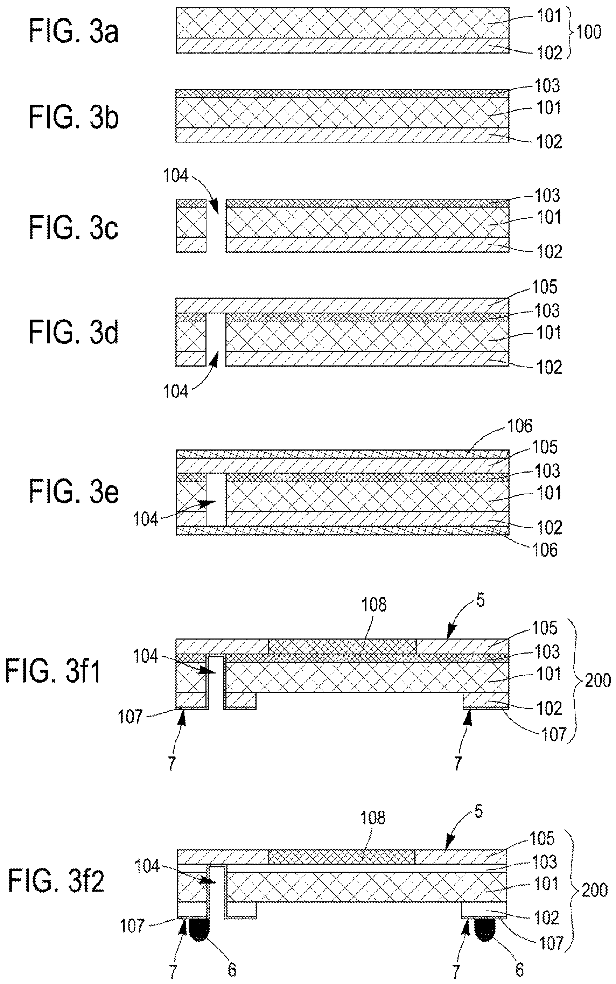

Ce procédé comprend :
- La fourniture d'un matériau complexe 100 comprenant un support 101 de matériau diélectrique sur lequel est laminé un feuillet constitué d'un premier matériau électriquement conducteur 102 (voir figure 3a) ; par exemple le matériau diélectrique est un poly-imide dont l'épaisseur est comprise entre 25 et 75 micromètres, et est préférentiellement égale à 50 micromètres et le premier matériau électriquement conducteur 102 est un alliage de cuivre dont l'épaisseur est comprise entre 12 et 35 micromètres, et est préférentiellement égale à 18 micromètres ; pour une mise en œuvre du procédé selon l'invention performante au plan industriel, ce matériau complexe 100 (« copper clad » en anglais) est avantageusement fourni en rouleau et le procédé est mis en œuvre de rouleau à rouleau (« reel-to-reel » en anglais) ;
- L'enduction, avec un matériau adhésif 103, de la face du matériau diélectrique opposée à celle sur laquelle est laminé le premier matériau électriquement conducteur (voir figure 3b) ; le matériau adhésif 103 est par exemple une résine de type époxy, éventuellement modifiée avec des résines et des charges minérales ; le matériau adhésif 103 est ainsi déposé sur une épaisseur comprise entre 10 et 25 micromètres ; le matériau adhésif 103 subit éventuellement un procédé de séchage en continu pour évacuer les solvants présents dans la formulation au moment de son dépôt ;
- La perforation de trous 104 traversant le nouveau matériau complexe comprenant le support diélectrique 101, la couche du premier matériau électriquement conducteur 102 et la couche de matériau adhésif 103 (voir figure 3c) ;
- La lamination d'une couche d'un deuxième matériau électriquement conducteur 105 ; par exemple, ce deuxième matériau électriquement conducteur est un alliage de cuivre dont l'épaisseur est comprise entre 12 et 35 micromètres, préférentiellement cette épaisseur est égale à 18 micromètres ; cette couche constituée du deuxième matériau électriquement conducteur 105 obture les trous 104 (voir figure 3d) ; le matériau adhésif 103 subit éventuellement une étape de réticulation selon un cycle défini avec des paliers de températures adaptés à la chimie de matériau adhésif 103 ;
- La lamination d'un film sec de résine photosensible 106 sur chacune des deux faces principales du complexe obtenu à l'issue de l'étape précédente (voir figure 3e), puis l'insolation à travers un masque, et la révélation de la résine photosensible pour former des motifs utilisés lors d'étapes subséquentes
   _ de gravure sur certaines zones des couches de premier 102 et deuxième 105 matériaux électriquement conducteurs ;
   _ de dépôts électrolytiques de couches de métaux 107 (cuivre, nickel, or, palladium, argent par exemples) destinés à faciliter la soudure de fils de connexion sur le deuxième matériau conducteur et/ou à réaliser des vias conducteurs entre le premier 102 et le deuxième 105 matériau conducteur au niveau des trous 104 ;
   _ de dépôt d'une couche d'un matériau de protection 108 sur une zone de détection ; ce matériau de protection 108 est, par exemple, un matériau de couverture photosensible ; par exemple, la couche de matériau de protection 108 a une épaisseur comprise entre 15 et 50 micromètres, et est par exemple égale à 25 micromètres ; par exemple, la couche de matériau de protection 108 est déposée en film laminé sur la face avant du support 101 ; par exemple, la couche de matériau de protection 108 est déposée sous forme d'un film d'époxy-acrylate (par exemple Par exemple, il s'agit du produit commercialisé sous la référence par la société Ethernal (www.eternal-group.com) ; alternativement, la couche de matériau de protection 108 est déposée en utilisant une technique de sérigraphie ; alternativement encore, la couche de matériau de protection 108 est déposée par une technique semblable à celle du jet d'encre ; alternativement encore, la couche de matériau de protection 108 est déposée par une technique d'enduction ; la couche de protection 108 s'étend en face avant sur une surface correspondant à une zone de détection ; et
   _ dans les cas où le dépôt de la couche d'un matériau de protection 108 est réalisé par une technique de dépôt non sélective, après dépôt de la couche d'un matériau de protection 108, il peut être nécessaire de réaliser une étape d'exposition à un rayonnement approprié à travers un masque, suivie d'une étape de développement chimique ;
   _ une étape de réticulation thermique de la couche de protection.

Selon un mode particulier de mise en œuvre du procédé selon l'invention, on réalise un dépôt d'un matériau de soudure 6 sur des plots de connexion 7 réalisés au cours des étapes précédentes dans la couche du premier matériau conducteur 102. Par exemple le matériau de soudure 6 est un alliage d'étain-bismuth ou d'étain-bismuth-argent; par exemple le matériau de soudure 6 est déposé par sérigraphie ou par jet (« jetting » en anglais). En outre, au lieu de rendre les trous 104 conducteurs à l'aide de dépôts électrolytiques de couches de métaux 107, on peut aussi profiter de cette étape de dépôt d'un matériau de soudure 6 pour déposer celui-ci dans les trous 104 et les rendre ainsi conducteurs entre les couches du premier 102 et du deuxième 105 matériaux conducteurs.

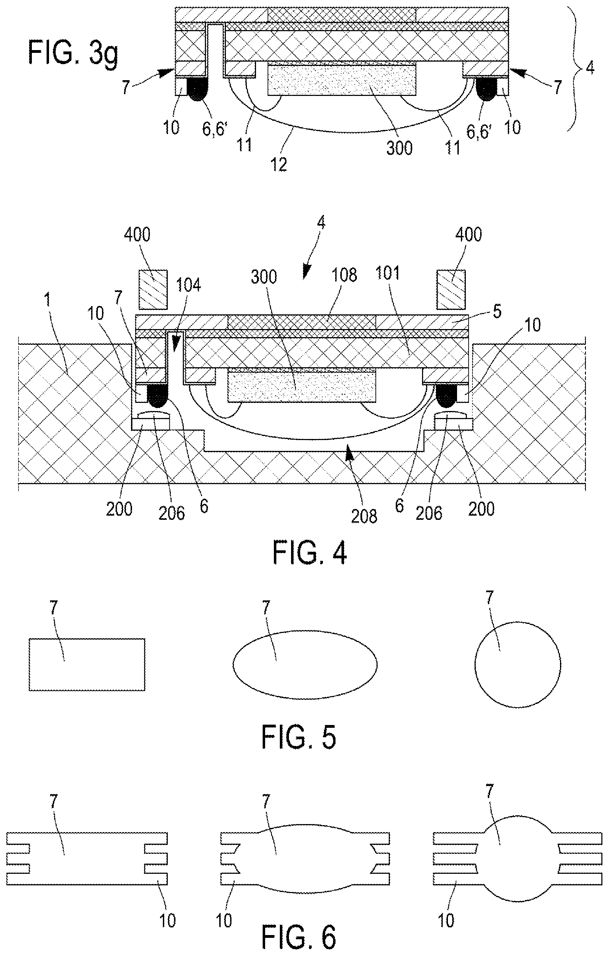

Le matériau de soudure 6 peut être déposé sur des plots de connexion 7 de différentes formes (voir figure 5). Par exemple, ces formes ont un pourtour essentiellement continu qui délimite une forme rectangulaire, en losange, carrée, ovale, ou ronde.

Alternativement, au lieu de déposer un matériau de soudure 6 sur les plots de connexion 7, ils sont laissés vierges, jusqu'à l'opération d'encartage du module 4 dans la carte 1. Alors, lors de l'opération d'encartage, préalablement à la mise en place du module 4 dans la cavité 208 ménagée (par exemple par fraisage) dans le corps de carte, un matériau de soudure 6, une pâte ou un film conducteur anisotrope 6' est déposé sur les plots de connexion 7, afin d'établir une connexion avec le circuit 200 logé dans le corps de carte (voir figures 3 et 4). Lorsqu'une pâte ou un film conducteur anisotrope 6' est utilisé, les plots de connexion 7 peuvent avoir une forme telle que celles décrites ci-dessus en relation avec la figure 5 ou bien ils peuvent avoir une forme avec des extensions 10 permettant un meilleur accrochage de la pâte ou une meilleure performance en termes de conductibilité électrique du film conducteur anisotrope 6' sur les plots de connexion 7.

Mais plus avantageusement, les plots de connexion 7 ont une forme compatible aussi bien avec l'utilisation d'un matériau de soudure 6, qu'avec une pâte ou un film conducteur anisotrope 6'. A cette fin, les plots de connexion 7 peuvent avoir des formes comprenant un rectangle, un losange, un carré, un ovale, ou un disque, ainsi que des extensions 10 latérales (voir figure 6).

A l'issue des étapes ci-dessus, on obtient un rouleau supportant des supports 200 de capteur biométrique pour carte à puce. Chacun de ces supports 200 a une structure correspondant par exemple à celle représentée sur la figure 3f1 ou la figure 3f2 selon que le capteur biométrique est assemblé après ou avant le dépôt de la pâte à souder 6 sur les plages 7. Chaque support 200 comprend donc :
- Une face avant, avec un bézel 5 formé dans la couche du deuxième matériau conducteur 105, une couche de protection 108 déposée sur la couche de matériau adhésif 103, au niveau d'une zone de détection située à l'intérieur de l'anneau formé par le bézel 5 ;
- Une face arrière avec des plots de connexion 7, éventuellement avec une goutte d'un matériau de soudure 6 déposée sur au moins certains de ces plots de connexion 7 afin de pouvoir connecter ultérieurement un module 4 à un circuit 200 intégré dans le corps de carte.

En vue de son utilisation et de son intégration dans une carte à puce, chaque support 200 est muni d'un capteur biométrique 300 d'empreintes digitales. Ce capteur biométrique 300 est fixé sur la face arrière, par exemple, par une technologie connue de fixage de puce (« die attach » en anglais). Par exemple, on fixe le capteur biométrique 300 sur la face arrière du support 101 à l'aide d'un adhésif thermodurcissable à des températures comprises entre 100°C et 150°C et qui possède la caractéristique de migrer par capillarité sous la totalité de la surface du capteur sans générer de vide, ni de bulles (« underfill » en anglais).

Le dépôt d'un matériau de soudure 6 sur des plots de connexion 7 est réalisé avant ou après assemblage du capteur biométrique 300, mais préférentiellement après pour éviter que le capteur biométrique 300 ne subisse un choc thermique lors de l'opération de refusion de la pâte à souder formant le matériau de soudure 6.

De même, le matériau de soudure 6 est déposé par sérigraphie ou par jet (« jetting » en anglais).

Préférentiellement, le dépôt du matériau de soudure 6 sur des plots de connexion 7 est réalisé par jet si le capteur biométrique 300 est déjà assemblé sur le support diélectrique 101.

Le capteur biométrique 300 occupe, sur la face arrière, une surface correspondant essentiellement à une aire de détection située en vis-à-vis de la zone de détection sur laquelle est déposée la couche de protection 108. Ce capteur biométrique 300 est connecté aux plots de connexion 7 et au bézel 5 à l'aide d'une technologie connue, telle que la technologie de la puce renversée (« flip chip » en anglais) ou la connexion par fils conducteurs 11 (« wire bonding » en anglais). Avantageusement, le capteur biométrique 300 et ses éventuels fils conducteurs 11 sont protégés dans une résine d'encapsulation 12. Un adhésif thermofusible 10 (« hot melt » en anglais) est, éventuellement, également disposé en face arrière sur, ou à côté, des plots de connexion 7. Cet adhésif thermofusible 10 est destiné à fixer le module 4 de capteur biométrique dans la cavité 208 ménagée dans le corps d'une carte à puce.

Lors de l'encartage du module 4 dans un corps de carte, pour établir une connexion entre les plots de connexion 7 du module et le circuit 200 qui est intégré dans le corps de carte, plusieurs options sont possibles. On peut par exemple souder directement les plots de connexion 7 au circuit 200 à l'aide du matériau de soudure 6 déposé sur les plots de connexion 7 (voir figure 4). Alternativement, on peut déposer sur le circuit 200 des gouttes 206 d'un matériau de soudure et réaliser une connexion entre les plots de soudure 7 et le circuit 200 par fusion de l'un, de l'autre, ou des deux matériaux de soudure ayant été préalablement déposés, chacun respectivement, sur les plots de connexion 7 et sur le circuit 200. Plus particulièrement, par exemple on peut déposer un premier matériau de soudure 6 sur les plots de connexion 7 et un deuxième matériau de soudure 206 sur le circuit 200. Le premier matériau de soudure 6 est alors avantageusement un matériau de soudure ayant une température de fusion à basse température de fusion (par exemple une température de fusion inférieure ou égale à 140°C), le deuxième matériau de soudure 206 ayant une température de fusion plus haute, voisine ou identique à celle du premier matériau de soudure 6. Avantageusement, l'utilisation d'un deuxième matériau de soudure 206 à plus haute température de fusion permet de limiter le risque d'un fluage du ou des matériaux de soudure dans et vers le bord de la cavité 208, voire à l'extérieur de celle-ci.

Par exemple, pour réaliser la connexion des plots de connexion 7 avec le circuit 200, on place une thermode 400 sur le bézel 5. Le bézel 5 étant avantageusement en vis-à-vis des plots de connexion 7 de part et d'autre du support 101, la conduction thermique s'effectue ainsi particulièrement bien entre les deux faces du support 101.

En utilisant un premier matériau de soudure 6 à basse température de fusion (inférieure ou égale à 140°C) sur les plots de connexion 7 et un deuxième matériau de soudure 206 à plus haute température sur le circuit 200, la thermode 400, chauffée par exemple à une température de 230°C est appliquée pendant 2,5 secondes. La chaleur fournie par la thermode 400 diffuse également au niveau de l'adhésif thermofusible 10 pour coller le module 4 dans la carte 1.

En utilisant, un premier matériau de soudure 6 à basse température de fusion (inférieure ou égale à 140°C) sur les plots de connexion 7 et un deuxième matériau de soudure 206, sur le circuit 200, ayant une température de fusion égale, voisine, ou inférieure, à celle du premier matériau de soudure 6, la thermode 400, chauffée par exemple à une température de 230°C est appliquée pendant 1.5 secondes. Le procédé selon est donc, dans ce cas, plus rapide. En outre, l'utilisation de matériaux de soudure 6, 206 à basse température de fusion, permet de mettre en œuvre une thermode 400 avec une surface portante plus limitée, ce qui peut contribuer à mieux maitriser le fluage et à limiter les risques de déformation de la carte 1 et/ou du module 4.

D'une manière générale, pour connecter le module 4 au circuit 200, on peut utiliser une colle ou pâte électriquement conductrice 6', un film anisotrope conducteur ou un matériau de soudure 6. Mais dans tous les cas, avantageusement, on utilise le procédé décrit ci-dessus ou des variantes de celui-ci, en réalisant des plots de connexion 7 ayant une forme compatible aussi bien avec l'utilisation d'un matériau de soudure 6, qu'avec une pâte ou un film conducteur anisotrope 6', cette forme pouvant être rectangulaire, en losange, carrée, un ovale, ou en forme de disque, avec en outre des extensions 10 latérales (voir figure 6). Le module 4 selon l'invention est alors le même qu'il soit connecté par soudure ou à l'aide d'un adhésif conducteur. Cela permet de fabriquer le module 4 en plus grandes séries tout en laissant la possibilité à l'encarteur de choisir l'une ou l'autre des technologies de connexion.

Il a été décrit en relation avec les figures 2, 3 et 4, la réalisation et l'encartage d'un module 4 comprenant un bézel 5 en face avant. Dans le cas, par exemple, où le capteur biométrique 300 n'est pas ou peu sensible aux charges électrostatiques, on peut se dispenser de bézel 5 (voir figure 1). Le procédé décrit ci-dessus est alors aisément simplifié. On peut en effet se dispenser de réaliser des trous 104. On peut également n'utiliser qu'un seul feuillet de matériau conducteur 102 (on supprime ainsi notamment les étapes illustrées par les figures 3c et 3d). Le matériau conducteur 102 est alors placé uniquement sur la face arrière du support 101, pour former les plots de connexion 7. La couche de protection 108 est réalisée de manière à recouvrir au moins la zone de détection située en vis-à-vis l'aire de détection du capteur 300. La couche de protection 108, outre sa fonction de protection proprement dite du support 101, indique où placer le doigt pour en détecter l'empreinte. La couche de protection 108 peut être teintée de différentes couleurs afin, par exemple, de s'harmoniser avec la couleur de la carte 1.

La couche de protection 108 est éventuellement constitué d'une encre ou comprend une encre. Par exemple, il s'agit d'une encre à base d'époxy-acrylate. Par exemple, il s'agit du produit commercialisé sous la référence SD 2444 NB-M par la société Peters (www.peters.de).

## Revendications

1. Module de capteur biométrique pour carte à puce, comprenant
- un support (101) diélectrique comportant une face avant et une face arrière, formant toutes deux des faces principales du support (101),
- un capteur biométrique (300) pour la détection d'empreintes digitales attaché à la face arrière et s'étendant sous la face arrière sur une aire de détection située en vis-à-vis d'une zone de détection située sur la face avant du support (101),
**caractérisé par le fait qu'**il comprend, en face avant, sur une zone de détection s'étendant en vis-à-vis de l'aire de détection et sur une surface correspondant au moins à celle de l'aire de détection, au moins une couche de protection (108) comprenant un matériau de couverture photoimageable.

2. Module selon la revendication 1, dans lequel le matériau de couverture photoimageable est à base de résines époxy-acrylates.

3. Module selon la revendication 1 ou 2, dans lequel la couche de protection (108) a une épaisseur comprise entre 5 et 100 micromètres, et a plus préférentiellement une épaisseur voisine de 25 micromètres.

4. Module selon l'une des revendications 1 à 3, dans lequel la couche de protection (108) est déposée sur une couche d'adhésif (103) à base de résine époxy.

5. Module selon l'une des revendications précédentes, dans lequel un bézel (5) est formé sur la face avant et la couche de protection (108) recouvre une zone située à l'intérieur du bézel (5).

6. Module selon la revendication 5, comprenant, sur la face arrière, des plots de connexion (7) électriquement conducteurs, ces plots de connexion (7) étant placés essentiellement en vis-à-vis d'une zone de la face avant recouverte par le bézel (5) et au moins un via conducteur (104) étant réalisé dans l'épaisseur du support (101), ce via (104) reliant électriquement le bézel (5) aux plots de connexion (7).

7. Module selon la revendication 6, dans lequel au moins certains des plots de connexion (7) comportent chacun au moins une goutte de matériau de soudure (6).

8. Carte à puce comprenant un corps de carte avec un circuit (200) électrique intégré dans le corps de carte et un module (4) selon l'une des revendications précédentes, le module (4) et le circuit (200) étant électriquement connectés à l'aide d'un matériau de soudure (6).

9. Procédé de fabrication d'un module (4) de capteur biométrique pour carte à puce, comprenant des étapes au cours desquelles
- on fournit un support (101) diélectrique comportant une face avant et une face arrière, formant toutes deux des faces principales du support (101),
- on attache un capteur biométrique (300) pour la détection d'empreintes digitales à la face arrière, une aire de détection couverte par le capteur sur la face arrière étant placée en vis-à-vis d'une zone de détection située en face avant du support (101),
**caractérisé par le fait que** l'on réalise sur la zone de détection, une couche de protection (108) d'un matériau de couverture photoimageable.

10. Procédé selon la revendication 9, dans lequel le support (101) diélectrique est un support flexible de la famille des polyimides.

11. Procédé selon la revendication 9 ou 10, dans lequel
- on revêt la face avant d'une couche électriquement conductrice (105), dans laquelle on réalise un bézel (5), la couche de protection (108) recouvrant en face avant une surface située à l'intérieur du bézel et
- on réalise au moins un via conducteur (104), dans l'épaisseur du support (101) pour relier électriquement le bézel (5) à la face arrière.

12. Procédé selon la revendication 11, dans lequel
- on fournit le support (101) avec une dite autre couche électriquement conductrice (102) sur la face arrière, puis on revêt la face avant d'une couche d'adhésif (103),
- on réalise au moins un trou (104) destiné à former le via, ce trou (104) traversant ladite autre couche conductrice (102), le support (101) et la couche d'adhésif (103),
- on lamine ladite couche électriquement conductrice (105) sur la face arrière, ladite couche conductrice (105) recouvrant au moins partiellement le trou (104) destiné à former le via,
- on grave le bézel (5) dans ladite couche conductrice (105), en laissant le trou (104) destiné à former le via au moins partiellement recouvert de ladite couche conductrice (105),
- on dépose, à l'intérieur du bézel (5), la couche de protection (108) sur la couche d'adhésif (103) mise à nu lors de la gravure du bézel (5).

13. Procédé selon la revendication 12, dans lequel on grave dans ladite autre couche conductrice (102), des plots de connexion (7), de manière à ce qu'au moins certains d'entre eux soient placés essentiellement en vis-à-vis d'une zone de la face avant recouverte par le bézel (5).

14. Procédé selon l'une des revendications 9 à 13, dans lequel on attache le capteur biométrique (300) sur la face arrière du support (101) à l'aide d'un adhésif pour fixation de puces réticulant à des températures comprises entre 100°C et 150°C .

15. Procédé selon la revendication 14, dans lequel on dépose au moins une goutte de soudure (6) sur au moins certains des plots de connexion (7).

## Patentansprüche

1. Biometrisches Sensormodul für eine Chipkarte, umfassend:
• einen dielektrischen Träger (101), der eine Vorderseite und eine Rückseite aufweist, die beide Hauptflächen des Trägers (101) bilden,
• einen biometrischen Sensor (300) zur Erfassung von Fingerabdrücken, der an der Rückseite angebracht ist und sich unter der Rückseite über einen Erfassungsbereich erstreckt, der einer auf der Vorderseite des Trägers (101) befindlichen Detektionszone gegenüberliegt,
**dadurch gekennzeichnet, dass** es auf der Vorderseite, auf einer Detektionszone, die sich gegenüber dem Erfassungsbereich erstreckt, und auf einer Fläche, die mindestens der des Erfassungsbereichs entspricht, mindestens eine Schutzschicht (108) umfasst, die ein fotoabbildbares Deckschichtmaterial enthält.

2. Modul nach Anspruch 1, wobei das fotoabbildbare Deckschichtmaterial auf Epoxid-AcrylatHarzen basiert.

3. Modul nach Anspruch 1 oder 2, wobei die Schutzschicht (108) eine Dicke zwischen 5 und 100 Mikrometern und noch bevorzugter eine Dicke von etwa 25 Mikrometern aufweist.

4. Modul nach einem der Ansprüche 1 bis 3, wobei die Schutzschicht (108) auf einer Klebstoffschicht (103) auf Basis von Epoxidharz abgeschieden ist.

5. Modul nach einem der vorhergehenden Ansprüche, wobei auf der Vorderseite eine Blende (5) ausgebildet ist und die Schutzschicht (108) eine innerhalb der Blende (5) liegende Zone bedeckt.

6. Modul nach Anspruch 5, das auf der Rückseite elektrisch leitfähige Anschlussflächen (7) umfasst, wobei diese Anschlussflächen (7) im Wesentlichen gegenüber einer von der Blende (5) bedeckten Zone der Vorderseite angeordnet sind und mindestens eine leitfähige Durchkontaktierung (104) in der Dicke des Trägers (101) ausgebildet ist, wobei diese Durchkontaktierung (104) die Blende (5) elektrisch mit den Anschlussflächen (7) verbindet.

7. Modul nach Anspruch 6, wobei mindestens einige der Anschlussflächen (7) jeweils mindestens einen Tropfen Lötmaterial (6) aufweisen.

8. Chipkarte, umfassend einen Kartenkörper mit einer in dem Kartenkörper integrierten elektrischen Schaltung (200) und ein Modul (4) nach einem der vorhergehenden Ansprüche, wobei das Modul (4) und die Schaltung (200) mittels eines Lötmaterials (6) elektrisch verbunden sind.

9. Verfahren zur Herstellung eines biometrischen Sensormoduls (4) für eine Chipkarte, umfassend die Schritte:
• Bereitstellen eines dielektrischen Trägers (101), der eine Vorderseite und eine Rückseite aufweist, die beide Hauptflächen des Trägers (101) bilden,
• Anbringen eines biometrischen Sensors (300) zur Erfassung von Fingerabdrücken an der Rückseite, wobei ein vom Sensor bedeckter Erfassungsbereich auf der Rückseite gegenüber einer auf der Vorderseite des Trägers (101) befindlichen Detektionszone platziert wird, **dadurch gekennzeichnet, dass** auf der Detektionszone eine Schutzschicht (108) aus einem fotoabbildbaren Deckschichtmaterial hergestellt wird.

10. Verfahren nach Anspruch 9, wobei der dielektrische Träger (101) ein flexibler Träger aus der Familie der Polyimide ist.

11. Verfahren nach Anspruch 9 oder 10, wobei:
• die Vorderseite mit einer elektrisch leitfähigen Schicht (105) beschichtet wird, in der eine Blende (5) ausgebildet wird, wobei die Schutzschicht (108) auf der Vorderseite eine innerhalb der Blende liegende Fläche bedeckt, und
• mindestens eine leitfähige Durchkontaktierung (104) in der Dicke des Trägers (101) ausgebildet wird, um die Blende (5) elektrisch mit der Rückseite zu verbinden.

12. Verfahren nach Anspruch 11, wobei:
• der Träger (101) mit einer besagten anderen elektrisch leitfähigen Schicht (102) auf der Rückseite bereitgestellt wird, dann die Vorderseite mit einer Klebstoffschicht (103) beschichtet wird,
• mindestens ein zur Bildung der Durchkontaktierung bestimmtes Loch (104) ausgebildet wird, wobei dieses Loch (104) die besagte andere leitfähige Schicht (102), den Träger (101) und die Klebstoffschicht (103) durchdringt,
• die besagte elektrisch leitfähige Schicht (105) auf die Rückseite laminiert wird, wobei die besagte leitfähige Schicht (105) das zur Bildung der Durchkontaktierung bestimmte Loch (104) zumindest teilweise bedeckt,
• die Blende (5) in die besagte leitfähige Schicht (105) geätzt wird, wobei das zur Bildung der Durchkontaktierung bestimmte Loch (104) zumindest teilweise von der besagten leitfähigen Schicht (105) bedeckt bleibt,
• die Schutzschicht (108) innerhalb der Blende (5) auf die beim Ätzen der Blende (5) freigelegte Klebstoffschicht (103) abgeschieden wird.

13. Verfahren nach Anspruch 12, wobei in der besagten anderen leitfähigen Schicht (102) Anschlussflächen (7) geätzt werden, so dass mindestens einige von ihnen im Wesentlichen gegenüber einer von der Blende (5) bedeckten Zone der Vorderseite angeordnet sind.

14. Verfahren nach einem der Ansprüche 9 bis 13, wobei der biometrische Sensor (300) an der Rückseite des Trägers (101) mit Hilfe eines Chip-Befestigungsklebstoffs angebracht wird, der bei Temperaturen zwischen 100°C und 150°C aushärtet.

15. Verfahren nach Anspruch 14, wobei mindestens ein Tropfen Lot (6) auf mindestens einigen der Anschlussflächen (7) aufgebracht wird.

## Claims

1. A biometric sensor module for a smart card, comprising:
• a dielectric support (101) having a front face and a rear face, both forming main faces of the support (101),
• a biometric sensor (300) for detecting fingerprints, attached to the rear face and extending under the rear face over a detection area located opposite a detection zone situated on the front face of the support (101),
**characterised in that** it comprises, on the front face, on a detection zone extending opposite the detection area and over a surface corresponding at least to that of the detection area, at least one protective layer (108) comprising a photoimageable coverlay material.

2. The module according to Claim 1, wherein the photoimageable coverlay material is based on epoxyacrylate resins.

3. The module according to Claim 1 or 2, wherein the protective layer (108) has a thickness of between 5 and 100 micrometres, and more preferably has a thickness of about 25 micrometres.

4. The module according to any one of Claims 1 to 3, wherein the protective layer (108) is deposited on an adhesive layer (103) based on epoxy resin.

5. The module according to any one of the preceding claims, wherein a bezel (5) is formed on the front face and the protective layer (108) covers an area located inside the bezel (5).

6. The module according to Claim 5, comprising, on the rear face, electrically conductive connection pads (7), said connection pads (7) being placed substantially opposite an area of the front face covered by the bezel (5), and at least one conductive via (104) being formed in the thickness of the support (101), said via (104) electrically connecting the bezel (5) to the connection pads (7).

7. The module according to Claim 6, wherein at least some of the connection pads (7) each comprise at least one droplet of solder material (6).

8. A smart card comprising a card body with an electrical circuit (200) integrated in the card body and a module (4) according to any one of the preceding claims, the module (4) and the circuit (200) being electrically connected by means of a solder material (6).

9. A method for manufacturing a biometric sensor module (4) for a smart card, comprising the steps of:
• providing a dielectric support (101) having a front face and a rear face, both forming main faces of the support (101),
• attaching a biometric sensor (300) for detecting fingerprints to the rear face, a detection area covered by the sensor on the rear face being placed opposite a detection zone situated on the front face of the support (101),
**characterised in that** a protective layer (108) of a photoimageable coverlay material is formed on the detection zone.

10. The method according to Claim 9, wherein the dielectric support (101) is a flexible support of the polyimide family.

11. The method according to Claim 9 or 10, wherein:
• the front face is coated with an electrically conductive layer (105), in which a bezel (5) is formed, the protective layer (108) covering on the front face a surface located inside the bezel, and
• at least one conductive via (104) is formed in the thickness of the support (101) to electrically connect the bezel (5) to the rear face.

12. The method according to Claim 11, wherein:
• the support (101) is provided with a said other electrically conductive layer (102) on the rear face, then the front face is coated with an adhesive layer (103),
• at least one hole (104) intended to form the via is formed, said hole (104) passing through said other conductive layer (102), the support (101) and the adhesive layer (103),
• said electrically conductive layer (105) is laminated onto the rear face, said conductive layer (105) at least partially covering the hole (104) intended to form the via,
• the bezel (5) is etched in said conductive layer (105), leaving the hole (104) intended to form the via at least partially covered by said conductive layer (105),
• the protective layer (108) is deposited, inside the bezel (5), on the adhesive layer (103) exposed during the etching of the bezel (5).

13. The method according to Claim 12, wherein connection pads (7) are etched in said other conductive layer (102), such that at least some of them are placed substantially opposite an area of the front face covered by the bezel (5).

14. The method according to any one of Claims 9 to 13, wherein the biometric sensor (300) is attached to the rear face of the support (101) by means of a die-attach adhesive curing at temperatures of between 100°C and 150°C.

15. The method according to Claim 14, wherein at least one droplet of solder (6) is deposited on at least some of the connection pads (7).
